# EUROPÄISCHE PATENTSCHRIFT

(11) **EP 0 746 492 B1**
(45) Veröffentlichungstag und Bekanntmachung des Hinweises auf die Patenterteilung: **20.05.1998**
(21) Anmeldenummer: 95911197.2
(22) Anmeldetag: 23.02.1995
(51) Int. Cl.: B62D 5/32

(54) **HYDRAULISCHE LENKEINRICHTUNG MIT ÜBERSETZUNGSÄNDERUNG**
VARIABLE-RATIO HYDRAULIC STEERING SYSTEM
DIRECTION HYDRAULIQUE A DEMULTIPLICATION VARIABLE

(30) Priorität: 04.03.1994 DE 4407308
(43) Veröffentlichungstag der Anmeldung: 11.12.1996
(73) Patentinhaber: HYDRAULIK NORD GMBH, 19370 Parchim (DE)
(72) Erfinder: BERGMANN, Erhard, D-19079 Mirow (DE); SCHILDMANN, Manfred, D-19370 Parchim (DE); VOSS, Gerhard, D-19370 Parchim (DE)
(74) Vertreter: Jaap, Reinhard
(86) Internationale Anmeldenummer: DE9500246
(87) Internationale Veröffentlichungsnummer: WO9523723

(56) Entgegenhaltungen:
- DE-A- 2 140 569
- DE-C- 2 228 531
- US-A- 5 050 696

## Beschreibung

Die Erfindung betrifft eine hydraulische Lenkeinrichtung nach dem Oberbegriff des Anspruchs 1.
Solche Lenkeinrichtungen werden insbesondere in langsamfahrenden Fahrzeugen mit hohen Achslasten eingesetzt.

Lenkeinrichtungen dieser Art sind seit langem bekannt und kommen in den vielfälltigsten Ausführungen zum Einsatz.
Sie bestehen in der Hauptsache aus einem Drehschiebersteuerventil und einem Orbitverdränger. Das Drehschiebersteuerventil wird aus einer äußeren, im Gehäuse eingepaßten Steuerhülse und einem inneren, konzentrisch angeordneten Steuerkolben gebildet. Der Steuerkolben ist einerseits über ein Zahnnabenprofil mit einem Lenkrad und andererseits über eine Stiftverbindung relativ beweglich mit der Steuerhülse verbunden. Die Steuerhülse ist über eine Stiftverbindung und eine Antriebswelle starr mit dem Läuferzahnrad des Orbitverdrängers verbunden. Der Steuerkolben ist mittels eines Federelementes gegenüber der Steuerhülse lagezentriert. Gegen die Kraft dieses Federelementes sind Steuerkolben und Steuerhülse begrenzt zueinander drehbar. Zwischen dem Drehschiebersteuerventil und dem Orbitveraränger bestent über kommutatorbohrungen eine hydraulische Verbindung.

Die hydraulische Lenkeinrichtung besitzt Anschlüsse für einen Zulauf, einem Rücklauf und für zwei Zylinderleitungen für den Stellzylinder.
Diese Lenkeinrichtungen zeichnen sich durch ein hohes Verdrängungsvolumen ohne übersetzungsverhältnis zwischen Servo- und Notbetrieb aus.
Das bedeutet aber, daß bei einem möglichen Ausfall der Versorgungspumpe die Lenkeinrichtung schlagartig auf Notbetrieb umschaltet und damit die gesamte notwendige Lenkkraft manuell am Lenkrad aufgebracht werden muß. Das ist insbesondere im Straßenverkehr ein Sicherheitsrisiko.
Es gibt deshalb schon seit langem das Bestreben, Lenkeinrichtungen zu schaffen, die in der konkreten Situation des Wechselns von Servo- auf Notbetrieb automatisch auf ein anderes übersetzungsverhältnis umschalten.

So ist die DE 22 28 531 C2 bekannt, die die Möglichkeit zum Verändern des Verdrängervolumens pro Lenkradumdrehung aufzeigt.
Diese Lenkeinrichtung besitzt einen Orbitverdränger mit zwei parallel geschalteten Verdrängereinheiten, deren bewegliche Zahnräder mechanisch durch eine Zahnwelle miteinander verbunden sind. In den hydraulischen Verbindungsleitungen zwischen den beiden Verdrängereinheiten sind Umschaltventile angeordnet, die bei Vorhandensein von Drucköl, also im Servolenkbetrieb, beide Verdrängereinheiten verbinden und im Notlenkbetrieb, also bei Ausfall der Versorgungspumpe, eine Verdrängereinheit unwirksam machen.

Durch das verringerte Verdrängungsvolumen wird zwangsläufig die Anzahl der notwendigen Drehungen am Lenkrad zum Erreichen eines bestimmten Einschlags der gelenkten Räder höher, aber die erforderliche Lenkkraft bleibt bei entsprechender Auslegung der Lenkung annähernd konstant und damit vom Fahrzeuglenker beherrschbar.
Allerdings ist der bauliche und damit der Kostenaufwand relativ groß. Auf Grund der komplizierten Gestaltung ist die Lenkeinrichtung auch äußerst störanfällig. Damit beseitigt sie das Sicherheitsrisiko im Straßenverkehr nicht.

Mit der DE 21 40 569 wurde eine Rotationskolbenmaschine bekannt, die insbesondere als Motor arbeitet.
Das Drehschiebersteuerventil der Rotationskolbenmaschine besitzt eine Umschaltvorrichtung, die wahlweise jede vierte von zwölf Ventilöffnungen der äußeren Steuerhülse mit dem Zulauf oder dem Ablauf verbindet.
Damit arbeitet die Rotationskolbenmaschine in einer der beiden Betriebsstufen mit einem verminderten Kammervolumen auf der Druckseite und damit mit einem verminderten Drehmoment und mit einer erhöhten Drehzahl. Die Umschaltvorrichtung wird von Hand betätigt.
Diese Lösung ist für Lenkeinrichtungen ungeeignet, da eine manuelle Betätigung der Umschaltvorrichtung völlig ungeeignet ist.
Außerdem besteht ein anderes Sicherheitsrisiko, da die Sicherheit des Umschaltens von Servo- auf Notbetrieb von der ständigen Funktionssicherheit und Einsatzbereitschaft einer Umschaltvorrichtung abhängt.

Es besteht daher die Aufgabe, eine Lenkeinrichtung der vorliegenden Art zu schaffen, die im Notbetrieb automatisch und mit hoher Sicherheit auf ein anderes Übersetzungsverhältnis umschaltet.

Diese Aufgabe wird durch die kennzeichnenden Merkmale des Anspruchs 1 gelöst.
Zweckdienliche Ausgestaltungen der Erfindung ergeben sich aus den Ansprüchen 2 bis 9.

Die Erfindung beseitigt die genannten Nachteile des Standes der Technik. Wesentlicher Vorteil ist die hohe Sicherheit des Umschaltens auf ein anderes Übersetzungsverhältnis. Auf Grund des Vorhandenseins mehrerer Umschalteinheiten ist es nur von geringer Bedeutung, wenn möglicherweise eine der Umschalteinheiten ausfällt, da in diesem Fall durch die anderen Umschalteinheiten auch eine Übersetzungsänderung gewährleistet ist, wenn auch nicht die optimale.

Die Erfindung soll nachstehend an zwei Ausführungsbeispielen näher erläutert werden.

Dazu zeigen
- Fig. 1:: Ein erstes Ausführungsbeispiel mit einer Lenkeinrichtung in Open-Center-Ausführung
- Fig. 2:: Ein zweites Ausführungsbeispiel mit einer Lenkeinrichtung in Open-Center-Ausführung
- Fig. 3:: Ein drittes Ausführungsbeispiel mit einer Lenkeinrichtung in Open-Center-Ausführung

Der hydraulische Kreislauf ist aus Gründen der Übersichtlichkeit vereinfacht dargestellt und besteht im wesentlichen aus einem Tank 1, einer Versorgungspumpe 2, einer Lenkeinrichtung 3 und einem auf die Fahrzeugräder wirkenden Stellzylinder 4.
Die Lenkeinrichtung 3 besitzt einen Zulaufanschluß 5, einen Ablaufanschluß 6 und zwei Zylinderanschlüsse 7 und 8. Hauptelemente der Lenkeinrichtung 3 sind ein Steuerventil 9 und eine nach dem Orbitprinzip arbeitende Dosierpumpe 10 mit einem Außenring von beispielsweise sieben und einem Läuferzahnrad mit dann sechs Zähnen. Das Steuerventil 9 ist in einem Gehäuse eingepaßt und besitzt bekanntermaßen einen inneren, von einem Lenkrad 11 ansteuerbaren Steuerkolben und eine äußere, mit dem Rotor der Dosierpumpe 10 mechanisch verbundene Steuerhülse. Steuerkolben und Steuerhülse sind konzentrisch zueinander angeordnet und in einem begrenzten Umfang und gegen die Kraft einer Feder drehbar. Der Steuerkolben besitzt sechs gleichmäßig am Umfang verteilt angeordnete, parallel wirkende Leitungen 12, die einerseits zum Zulaufanschluß 5 und andererseits zur Eingangsseite der Dosierpumpe 10 Verbindung haben und insgesamt sechs Leitungen 13 und 13', die einerseits mit der Ausgangsseite der Dosierpumpe 10 und andererseits zu einem Zylinderanschluß 7 oder 8 Verbindung haben. Die sechs Leitungen 12 bilden im Zusammenwirken mit Kanälen der Steuerhülse sechs verstellbare Eingangsdrosseln 14. Vom Zulaufanschluß 5, vor den Eingangsdrosseln 14 des Steuerventils 9 zweigt ein Kurzschlußpfad zum Ablaufanschluß 6 ab, in dem sich eine zu den Eingangsdrosseln 14 umgekehrt proportional verhaltende Kurzschlußdrossel 15 befindet.

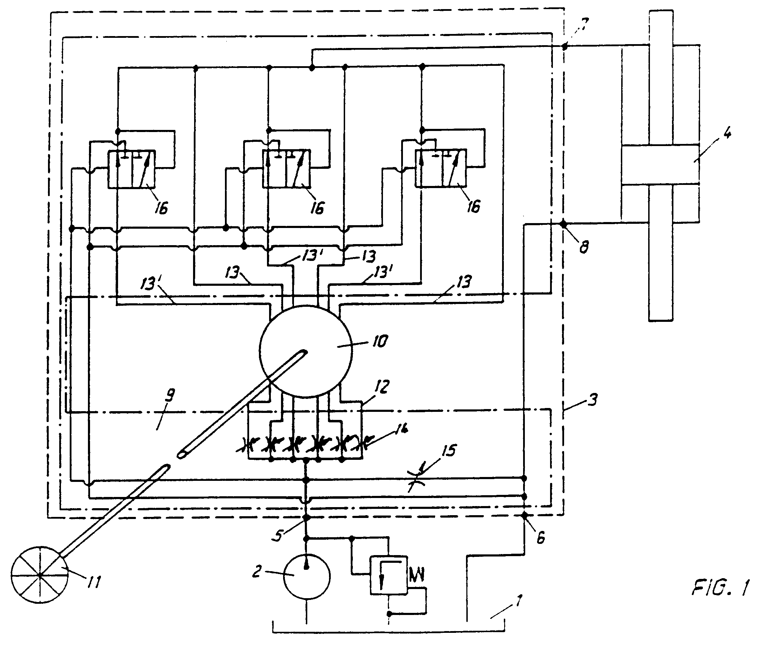

Im ersten Ausführungsbeispiel gemäß der Fig. 1 führen drei Leitungen 13 direkt zum jeweiligen Zylinderanschluß 7 oder 8. In den drei anderen Leitungen 13' ist jeweils eine fremdgesteuerte Umschalteinheit 16 angeordnet. Die Umschalteinheit 16 ist vorzugsweise als 3/2-Wegeventil mit einer zweiten ausgangsseitigen Verbindung zum Ablaufanschluß 6 oder zum Zulaufanschluß 5 ausgebildet.
Die Umschalteinheit 16 besitzt eine hydraulische Verstelleinheit, die einerseits Verbindung zur stromaufwärts der Dosierpumpe 10 gelegenen Zulaufleitung und andererseits Verbindung zu einem der stromabwärts der Dosierpumpe 10 gelegenen Leitungen 13 oder 13' hat. Wegen der höheren Druckdifferenz ist die Verstelleinheit des Umschaltventiles 16 vorteilhafterweise mit einer der Leitungen 13 verbunden.
Die Umschalteinheiten können in herkömmlicher Weise auch mit anderen Arten von Verstelleinheiten, beispielsweise je einer elektrischen Verstelleinheit zusammenwirken.

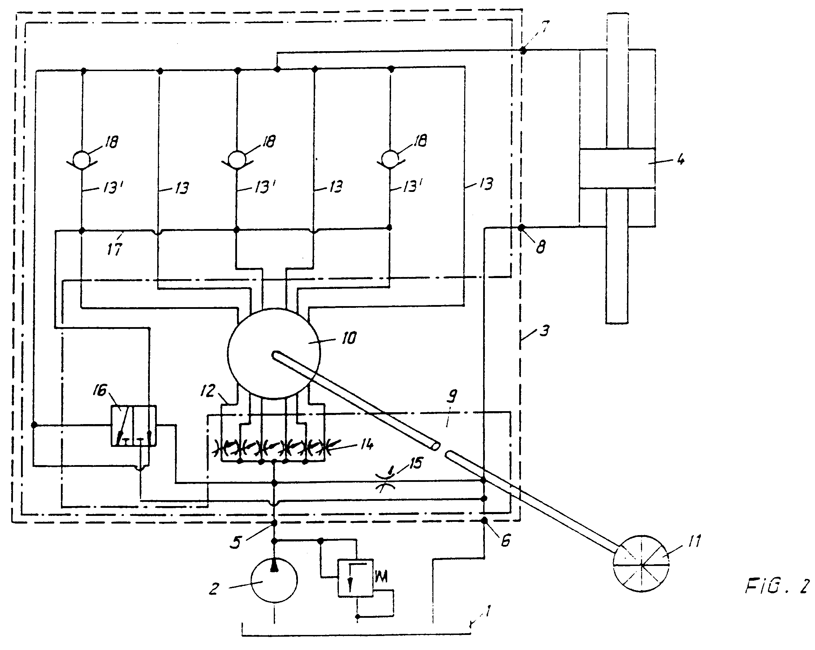

Es ist auch möglich, in der mit der Leitung 13 verbundenen Steuerleitung einer oder mehrerer Umschalteinheiten 16 jeweils ein fremdgesteuertes Sperrventil anzuordnen, womit der Fahrzeugführer durch das Blockieren einzelner Umschalteinheiten 16 das Übersetzungsverhältnis beim Umschalten von Servo- auf Notbetrieb bedarfsgerecht vorprogrammieren kann.
Im zweiten Ausführungsbeispiel gemäß der Fig. 2 ist eine Umschalteinheit 16 außerhalb der abschaltbaren Leitungen 13' in der Art angeordnet, daß auf der Eingangsseite eine Sammelleitung 17 zu einer oder mehreren Leitungen 13' führt und auf der Ausgangsseite wahlweise je eine Verbindung zu einem der Zylinderanschlüsse 7 oder 8 oder zum Ablaufanschluß 6 besteht.

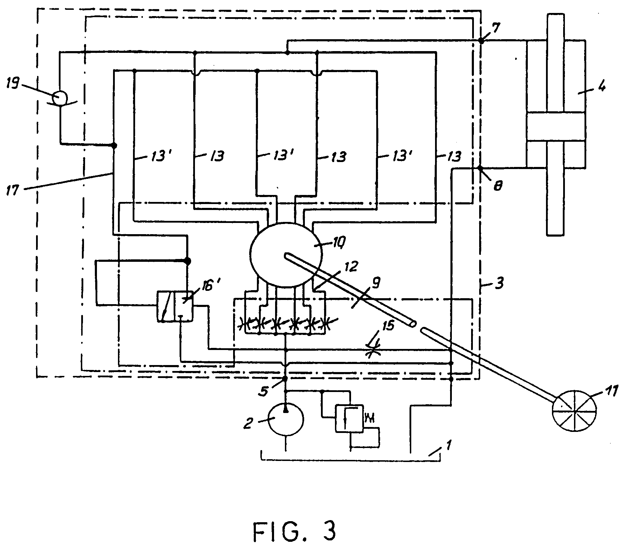

Die Ausgangsseite kann an Stelle mit dem Ablaufanschluß 6 auch mit dem Zulaufanschluß 5 verbunden sein. Die Verstelleinheit der Umschalteinheit 16 ist wiederum einerseits mit der Zulaufleitung vor der Dosierpumpe 10 und andererseits mit eine der Leitungen 13 oder 13'nach der Dosierpumpe 10 verbunden. Auch hier sind andere Arten von VerstellIeinheiten einsetzbar. In jeder Leitung 13' befindet sich ein stromabwärts nach dem zur Umschalteinheit 16 führenden Abzweig angeordnetes und in Richtung zum jeweiligen Zylinderanschluß 7 oder 8 hin öffnendes Rückschlagventil 18.
Wie die Fig. 3 zeigt, ist es auch zweckmäßig, an Stelle der einzelnen Rückschlagventile 18 ein für alle Leitungen 13' zuständiges Rückschlagventil 19 einzusetzen. Als Umschalteinheit 16' wird hier ein 2/2-Wegeventil verwendet, das wiederum verschiedenartig angesteuert werden kann.

Bei nichtbetätigter Lenkeinrichtung 3 befinden sich die Steuerhülse und der Steuerkolben des Steuerventiles 9 in neutraler Stellung, so daß alle sechs Eingangsdrosseln 14 geschlossen und die Kurzschlussdrossel 15 geöffnet sind. Das von der Versorgungspumpe 2 gelieferte Öl strömt über die Kurzschlussdrossel 15 ungenutzt zum Tank 1 zurück.
Durch Betätigung des Lenkrades 11 kommt es zur Auslenkung des Steuerkolbens gegenüber der Steuerhülse und damit zur Öffnung der Eingangsdrosseln 14. Das Öl gelangt in die Dosierpumpe 10, wird hier gemessen und in dosierter Menge in die zum Stellzylinder 4 führenden Leitungen 13 und 13' gefördert. Durch die drei Leitungen 13 gelangt das Öl direkt zu einem der Zylinderanschlüsse 7 oder 8 und damit zum Stellzylinder 4. In den anderen drei Leitungen 13' passiert das Öl jeweils die geöffneten Umschalteinheiten 16, 16'.

Im Servobetrieb verbinden die Umschalteinheiten 16, 16' die Leitungen 13' mit einem der Zylinderanschlüsse 7 oder 8, weil der Steuerdruck vor der Dosierpumpe 10 dem Steuerdruck nach der Dosierpumpe 10 um den Betrag der zwischen beiden Druckentnahmestellen auftretenden Strömungsdruckverluste überwiegt.

Im Notlenkbetrieb, also bei abgeschalteter Versorgungspumpe 2 ist die Leitung am Zulaufanschluß 5 drucklos. Das für die Lenkanlage notwendige Öl wird jetzt allein durch die manuelle Betätigung des Lenkrades 11 und damit von der Dosierpumpe 10 gefördert und dem Stellzylinder 4 zur Verfügung gestellt.
Dabei gelangt das Öl wiederum durch die drei Leitungen 13 direkt zu einem der Zylinderanschlüsse 7 oder 8 und damit zum Stellzylinder 4. Da jetzt das Steuerdruckverhältnis vom Druck vor der Dosierpumpe 10 und dem Druck nach der Dosierpumpe 10 umgekehrt gegenüber dem Servobetrieb ist, schalten die Umschalteinheiten 16, 16' und verbinden die entsprechenden Leitungen 13' mit dem Ablaufanschluß 6 oder alternativ mit dem Zulaufanschluß 5. Damit sind nur drei der sechs von der Dosierpumpe 10 abgehenden Leitungen an der Ölförderung beteiligt, wodurch sich die Lenkkraft halbiert und die Anzahl der notwendigen Drehungen am Lenkrad 11 zum Erreichen des gleichen Anschlags der gelenkten Räder gegenüber dem Servobetrieb verdoppelt.

## Patentansprüche

1. Hydraulische Lenkeinrichtung mit Übersetzungsänderung, die im wesentlichen aus einem Steuerventil (9) und einer Dosierpumpe (10) besteht, wobei das Steuerventil (9) einen vom Lenkrad ansteuerbaren Steuerkolben und eine mit dem Rotor der Dosierpumpe mechanisch verbundene Steuerhülse besitzt und der Steuerkolben und die Steuerhülse miteinander und mit der Dosierpumpe (10) korrespondierende Kanäle besitzen und die Dosierpumpe mehrere Verdrängerkammern aufweist, von denen einige ständig mit einem der Zylinderanschlüsse (7,8) und die anderen mittels Umschalteinheit (16) entweder mit einem der Zylinderanschlüsse (7,8) oder dem Ablaufanschluß (6) verbunden sind,
**dadurch gekennzeichnet**, daß eine Dosierpumpe (10) mit ausschließlich parallel angeordneten Verdrängerkammern mit Leitungen (13, 13') verwendet wird, von denen eine oder mehrere, jedoch höchstens eine weniger als vorhandene, Leitungen (13) die Dosierpumpe (10) direkt mit einem der Zylinderanschlüsse (7, 8) verbinden und die Umschalteinheit (16) den anderen Leitungen (13') zugeordnet ist und die Verstelleinheit der Umschalteinheit (16) einerseits vom Druck stromaufwärts der Dosierpumpe (10) in die die Dosierpumpe (10) mit einem der Zylinderanschlüsse (7, 8) verbindende Position und andererseits vom Druck stromabwärts der Dosierpumpe (10) in die die Dosierpumpe (10) mit dem Ablaufanschluß (6) oder dem Zulaufanschluß (5) verbindende Position beaufschlagbar ist.

2. Hydraulische Lenkeinrichtung nach Anspruch 1,
**dadurch gekennzeichnet**, daß die Verstelleinheit der Umschalteinheit (16) andererseits mit dem in den Leitungen (13) herrschenden Druck beaufschlagbar ist.

3. Hydraulische Lenkeinrichtung nach Anspruch 2,
**dadurch gekennzeichnet**, daß jeder Leitung (13') eine Umschalteinheit (16) zugeordnet ist.

4. Hydraulische Lenkeinrichtung nach Anspruch 3,
**dadurch gekennzeichnet**, daß drei Leitungen (13') vorgesehen sind.

5. Hydraulische Lenkeinrichtung nach Anspruch 4,
**dadurch gekennzeichnet**, daß in der mit dem Druck stromabwärts der Dosierpumpe (10) beaufschlagten Steuerleitung einer oder mehrerer Umschalteinheiten (16) jeweils ein fremdgesteuertes Sperrventil angeordnet ist.

6. Hydraulische Lenkeinrichtung nach den Ansprüchen 1 und 2, **dadurch gekennzeichnet**, daß die Umschalteinheit (16, 16') außerhalb der abschaltbaren Leitungen (13') angeordnet ist und eingangsseitig über eine Sammelleitung (17) mit den anderen Leitungen (13') verbunden ist und sich in jeder der Leitungen (13') ein stromabwärts nach dem zur Umschalteinheit (16, 16') führenden Abzweig angeordnetes und in Richtung zu einem der Zylinderanschlüsse (7, 8) hin öffnendes Rückschlagventil (18) befindet.

7. Hydraulische Lenkeinrichtung nach Anspruch 6,
**dadurch gekennzeichnet**, daß allen Leitungen (13') an Stelle der Rückschlagventile (18) ein zentrales Rückschlagventil (19) zugeordnet ist.

8. Hydraulische Lenkeinrichtung nach den Ansprüchen 5 und 6,
**dadurch gekennzeichnet**, daß die Umschalteinheiten (16, 16') mit pneumatischen, elektrischen, elektromagnetischen oder mechanischen Verstelleinheiten ausgerüstet sind.

9. Hydraulische Lenkeinrichtung nach Anspruch 8,
**dadurch gekennzeichnet**, daß die Verstelleinheiten fremdgesteuert ausgeführt sind.

## Claims

1. Hydraulic steering device with leverage variation, which substantially comprises a control valve (9) and a metering pump (10), wherein the control valve (9) has a control piston controllable by the steering wheel and a control sleeve mechanically connected to the rotor of the metering pump and the control piston and the control sleeve have channels corresponding with one another and with the metering pump (10) and the metering pump has a plurality of displacement chambers, of which some are constantly connected to one of the cylinder connections (7, 8) and the others are connected by means of changeover unit (16) either to one of the cylinder connections (7, 8) or to the outlet connection (6),
characterized in that a metering pump (10) having exclusively parallel displacement chambers with lines (13, 13') is used, of which lines one or more, but at most one less than the total number of lines (13) connect the metering pump (10) directly to one of the cylinder connections (7, 8) and the changeover unit (16) is associated with the other lines (13') and the adjusting unit of the changeover unit (16) is loadable, on the one hand, by the pressure upstream of the metering pump (10) into the position connecting the metering pump (10) to one of the cylinder connections (7, 8) and, on the other hand, by the pressure downstream of the metering pump (10) into the position connecting the metering pump (10) to the outlet connection (6) or the inlet connection (5).

2. Hydraulic steering device according to claim 1,
characterized in that the adjusting unit of the changeover unit (16) is loadable, on the other hand, by the pressure prevailing in the lines (13).

3. Hydraulic steering device according to claim 2,
characterized in that a changeover unit (16) is associated with each line (13').

4. Hydraulic steering device according to claim 3,
characterized in that three lines (13') are provided.

5. Hydraulic steering device according to claim 4,
characterized in that in each case one separately controlled blocking valve is disposed in the control line, acted upon by the pressure downstream of the metering pump (10), of one or more changeover units (16).

6. Hydraulic steering device according to claims 1 and 2,
characterized in that the changeover unit (16, 16') is disposed outside of the disconnectable lines (13') and is connected at the input side by a collecting line (17) to the other lines (13'), and a non-return valve (18), which is disposed downstream of the branch leading to the changeover unit (16, 16') and opening in the direction of one of the cylinder connections (7, 8), is situated in each of the lines (13').

7. Hydraulic steering device according to claim 6,
characterized in that, instead of the non-return valves (18), a central non-return valve (19) is associated with all of the lines (13').

8. Hydraulic steering device according to claims 5 and 6,
characterized in that the changeover units (16, 16') are equipped with pneumatic, electrical, electromagnetic or mechanical adjusting units.

9. Hydraulic steering device according to claim 8,
characterized in that the adjusting units are designed to be externally controlled.

## Revendications

1. Système hydraulique de direction avec variation de la démultiplication qui consiste essentiellement en une vanne de commande (9) et une pompe de dosage (10), la vanne de commande (9) possédant un piston de commande qui peut être commandé par le volant de direction et un manchon de commande relié mécaniquement au rotor de la pompe de dosage et le piston de commande et le manchon de commande possédant ensemble et avec la pompe de dosage (10) des canaux correspondants et la pompe de dosage présentant plusieurs chambres volumétriques, parmi lesquelles quelques unes sont reliées en permanence avec l'un des raccords de cylindre (7, 8) et les autres sont reliés au moyen d'une unité d'inversion (16) soit avec l'un des raccords de cylindre (7, 8), soit avec le raccord d'évacuation (6),
caractérisé en ce que
l'on utilise une pompe de dosage (10) avec des chambres volumétriques disposées exclusivement de façon parallèle, avec des conduites (13, 13'), parmi lesquelles une ou plusieurs, toutefois au maximum une de moins que les conduites existantes (13) relient la pompe de dosage (10) directement avec l'un des raccords de cylindre (7,8) et en ce que l'unité d'inversion (16) est associée aux autres conduites (13') et en ce que l'unité de réglage de l'unité d'inversion (16) peut être alimentée d'une part par la pression en amont de la pompe de dosage (10) dans la position qui relie la pompe de dosage (10) avec l'un des raccords de cylindre (7, 8) et d'autre part par la pression en aval de la pompe de dosage (10) dans la position qui relie la pompe de dosage (10) au raccord d'évacuation (6) ou au raccord d'admission (5).

2. Système hydraulique de direction, selon la revendication 1,
caractérisé en ce que
l'unité de réglage de l'unité d'inversion (16) peut être alimentée par ailleurs par la pression qui règne dans les conduites (13)

3. Système hydraulique de direction, selon la revendication 2,
caractérisé en ce que
une unité d'inversion (16) est associée à chaque conduite (13')

4. Système hydraulique de direction, selon la revendication 3,
caractérisé en ce que
trois conduites (13') sont prévues.

5. Système hydraulique de direction, selon la revendication 4,
caractérisé en ce que
l'on dispose une vanne d'obturation commandée par un appareil externe dans la conduite de commande, alimentée par la pression en aval de la pompe de dosage (10), d'une ou plusieurs unités d'inversion (16).

6. Système hydraulique de direction, selon les revendications 1 et 2,
caractérisé en ce que
• l'unité d'inversion (16, 16') est disposée en dehors des conduites débranchables (13') et est reliée du côté de l'entrée au moyen d'un collecteur (17) aux autres conduites (13') et
• un clapet anti-retour (18) se trouve dans chacune des conduites (13'), clapet qui est disposé en aval après la dérivation qui conduit vers l'unité d'inversion (16, 16'), et qui est ouvert en direction de l'un des raccords de cylindre (7, 8).

7. Système hydraulique de direction, selon la revendication 6,
caractérisé en ce que
l'on associe un clapet anti-retour (19) central à toutes les conduites (13') à la place des clapets anti-retour (18).

8. Système hydraulique de direction, selon les revendications 5 et 6,
caractérisé en ce que
les unités d'inversion (16, 16') sont équipées d'unités de réglage pneumatiques électriques, électromagnétiques ou mécaniques.

9. Système hydraulique de direction, selon la revendication 8,
caractérisé en ce que
les unités de réglage sont réalisées avec des commandes externes.
